# EUROPEAN PATENT SPECIFICATION

(11) **EP 0 653 689 B1**
(45) Date of publication and mention of the grant of the patent: **21.04.1999**
(21) Application number: 94117614.1
(22) Date of filing: 08.11.1994
(51) Int. Cl.: G05B 17/02, G01P 21/00

(54) **Vibration detecting device and vehicular load simulator using the devices**
Vibrationsfeststellungsgerät und Lastsimulator für Fahrzeug mit dessen Verwendung
Dispositif pour la détection de vibrations et simulateur de charge d'un véhicule l'utilisant

(30) Priority: 15.11.1993 JP 284661/93
(43) Date of publication of application: 17.05.1995
(73) Proprietor: HONDA GIKEN KOGYO KABUSHIKI KAISHA, Minato-ku Tokyo (JP)
(72) Inventor: Harashima, Shokichi, Wako-shi, Saitama (JP)
(74) Representative: Herzog, Markus, Dipl.-Phys. Dr.

(56) References cited:
- EP-A- 0 350 608
- EP-A- 0 444 866
- US-A- 4 950 914
- INDIAN JOURNAL OF TECHNOLOGY, vol.12, no.12, December 1974, INDIA pages 536 - 539 R.VISWANATHAN ET AL 'A DIRECT READING ACCELERATION AND DISPLACEMENT METER USING PO-AMPS'

## Description

The present invention relates to a method of simulating running conditions of a vehicle according to the pre-characterizing portion of claim 1 and to a vehicle load simulator according to the pre-characterizing portion of claim 4.

The invention starts from a prior-art vehicle load simulator and a method of simulating running conditions by use of said known vehicle load simulator. Said method comprises the steps of: actually running a vehicle (a motor-bicycle, automatic four-wheeled vehicle or the like); recording the vibration waveform applied to the vehicle as actual vibration waveform data; and applying, on the basis of the recorded actual vibration waveform data, the same vibration as that applied to the actual running vehicle to the vehicle mounted on a testing base (vehicle load simulator) by means of an oscillator.

A vehicle vibration test is performed as follows: First, a vibration applied to a vehicle running along a road surface is detected by an acceleration detecting device, and the detected acceleration is recorded in a data recorder. In the load simulation by a vehicle simulator, on the basis of the vibration data thus collected, a vibration is applied to the vehicle mounted on a testing base by way of the axle shaft or wheels of the vehicle by an oscillator. As for the oscillation by the oscillator in this vehicle vibration test, a transmission function of a system including the oscillator, vehicle and acceleration detecting device is obtained by repeating trial oscillation; an oscillation control signal is obtained on the basis of the transmission function and the collected actual vibration waveform; and the same vibration as that applied to the actually running vehicle is applied to the vehicle by the oscillator while controlling the oscillation on the basis of the oscillation control signal. In addition, at the time of both actual running and testing oscillation, the same acceleration detecting device is used.

In the above-described load simulation by the vehicle load simulator, the reproduction of a vertical vibration applied to an actually running vehicle is generally performed by recording the acceleration of the actually running vehicle by an acceleration detecting device attached near the axle shaft of the vehicle, and applying, to the vehicle mounted on a testing base, the same vibration as that with the vibration waveform thus recorded.

On the other hand, it may be considered that a differential transformer or a velocity meter is used for detecting the vibration of a vehicle. However, it has a structure of two parts, that is, a coil section and core section, and is not easy to be mounted on the vehicle; accordingly, it is not used for detecting the vibration of a vehicle. An optical displacement meter has a structure of one part, but is low in the sensitivity against a vibration with high frequency; accordingly, it is not used for detecting the vibration of a vehicle. On the contrary, the acceleration detecting device is suitable for detecting the vibration of a vehicle, because it is compact and lightweight, and further it has an integrated structure and is simply mounted on a vehicle.

For the above-described reason, the acceleration detecting device is used for detecting the vibration of a vehicle in the vehicle load simulator, and the acceleration applied to a vehicle is detected by the acceleration detecting device, and is collected. However, in the detection of the acceleration applied to a vehicle, the acceleration detecting device is required to withstand the acceleration having the upper limit frequency of 100 Hz or more and the acceleration level of 50 (G) or more.

However, the acceleration detecting device withstanding the acceleration having the upper limit frequency of 100 Hz or more and the acceleration level of 50 (G) or more has a disadvantage that it is low in the sensitivity against a vibration having low frequencies and is difficult to reproduce the frequency components of 2 to 3 Hz or less in the vehicle load simulator upon test oscillation. In particular, for a motor-bicycle, it is longer in its suspension than that of an automatic four-wheeled vehicle and is low in the frequency of vibration; accordingly, it requires the detection of low frequency components of vibration. Even for an automatic four-wheeled vehicle, main frequencies of rolling or pitching of the body are in the range from 1 to 2 Hz; accordingly, it requires the detection of low frequency components of vibration.

In the detection of a vibration of a vehicle, there is an inconvenience that an acceleration detecting device selected for detecting the maximum acceleration cannot detect low frequency components of vibration. To cope with the inconvenience, as exemplified in unexamined Japanese Patent Publication No. HEI 3-295437, an acceleration detecting device having a good sensitivity against low frequency components of vibration is provided in addition to an acceleration detecting device suitable for the detection of the maximum acceleration. In this case, for example, the acceleration detecting device suitable for low frequency components of vibration is mounted near the conventional acceleration detecting device, or it is mounted on a measurement portion of the body where low frequency components of vibration are generated. Thus, there is a disadvantage in preparing two kinds of acceleration detecting devices.

Moreover, an acceleration detecting device having a good sensitivity against low frequency components of vibration is expensive, and requires the careful handling because it is weak against shock and easily broken. In the case of running along a rough pavement for load simulation by a vehicle load simulator and of testing oscillation, an acceleration detecting device for detecting low frequency components of vibration cannot withstand the acceleration exceeding the allowable value and is often broken. Accordingly, the acceleration detecting device having a good sensitivity against low frequency components of vibration is difficult to be practically used in the vehicle load simulation.

Moreover, in the case of detecting the acceleration by use of two kinds of acceleration detecting devices mounted on a vehicle load simulator, there occurs a disadvantage that the provision of the two accelerating detecting devices is accompanied by the increase in the number of amplifiers for amplifying the output of the acceleration detecting devices and the channels of collecting device for collecting acceleration data.

Additionally, the provision of two acceleration detecting devices has the following disadvantages: In the case of conversion into digital data, there is increased the numbers of A/D converters, D/A converters for driving an oscillator, correcting circuits for correcting the D/A conversion output on the basis of a transmission function, and the like. Moreover, in the case where the correction on the basis of a transmission function is required to be performed by a computer, the load on calculation and the data area are increased linearly with the number of channels thereby deteriorating the response of a computer control system, and further the program becomes complex.

In the prior-art document "Indian Journal of Technology, vol.12, no.12, December 1974, India, pp. 536-539; R. Viswanathan et al" a direct reading acceleration and displacement meter for use with acceleration transducers to measure acceleration and displacement in vibration testing is disclosed. The circuit of said direct reading acceleration and displacement meter includes a double integrating stage comprising an operational amplifier for integrating the amplified output of the acceleration transducer twice. A millivoltmeter receiving the output from the double integrating stage provides direct reading of displacement. By means of a function switch, the acceleration measuring function may be selected. In this case, the amplified output of the acceleration transducer is lead directly to the millivoltmeter. The sole purpose of the double integrating stage is to provide a displacement signal for direct reading on the basis of the output from the acceleration transducer.

EP 0 444 866 A1 discloses a collision detecting system for vehicles. The collision detecting system comprises acceleration transducers, acceleration sensing circuits, differential amplifier circuits, integrating circuits and collision judgment circuits. These circuits are provided in order to distinguish between an impact of a car against an obstacle and high-G receipt from road conditions in order to make sure that an airbag-system is activated only when deceleration conditions according to a collision of the vehicle are present. The integrator circuits are used to detect the continuation of the high-G deceleration corresponding to an impact of the car.

US 4,950,914 discloses a collison detection system for a vehicle. This collision detection system also comprises an acceleration transducer and a signal processing circuit including an integrator to distinguish between an impact of a car against an obstacle and high-G receipt from road conditions in order to make sure that the airbag-system is activated only when deceleration conditions according to a collision of a vehicle are present.

It is the object of the invention to provide a method of simulating running conditions of a vehicle of the kind mentioned in the pre-characterizing part of claim 1, which only requires simple means, in order to detect a wide range of frequency components of vibration. This object is solved according to claim 1.

A vehicle load simulator according to the invention for carrying out a method according to claim 1 is defined in claim 4.

According to the present invention the acceleration applied to the vehicle is detected by the acceleration detecting device and the output from the acceleration detecting device is integrated by the integrator to be converted into a velocity signal, and is output. Since the detected acceleration output is converted into the velocity output, low frequencies of vibration are easily detected compared with the case using the detected acceleration signal. This makes it possible to detect a wide range of frequencies of vibration by only one acceleration detecting device.

When the output from the acceleration detecting device is inverted by an inverting amplifier and is supplied to the integrator, even if the integrator is constituted of an inverting operational amplifier, the polarity of the output from the integrator is made to correspond to the polarity of the detected acceleration output.

It is preferred that the method comprises the steps of measuring a transmission function of the system including the oscillator means, the vehicle mounted on the oscillator means, the acceleration detecting device and the integrator, and generating an oscillation control signal controlling said oscillator means on the basis of said transmission function and the difference between said response data and said signal indicative of vibration, to apply said vibration forces to said vehicle, said step of measuring the transmission function including the step of applying vibrational forces to said vehicle mounted on said oscillator means by controlling said oscillator means on the basis of the transmission function measuring oscillation data, and detecting the output of said integrator.

In the vehicle load simulator of the present invention using the vibration detecting device, the number of velocity detecting devices are reduced and the number of channels for the detected velocity output is reduced. In the case of conversion into digital data, there is not increased the numbers of A/D converters, D/A converters for driving an oscillator, correcting circuits for correcting D/A conversion output on the basis of a transmission function, and the like. Moreover, in the case where the correction on the basis of a transmission function is performed by a computer, the load on calculation and the data area are not increased linearly with the number of channels thereby preventing the deterioration of the response of a computer control system, and further the program is prevented from becoming complex.

Preferred embodiments of the vehicle load simulator for carrying out the method of the invention are defined in claims 5-10.

Hereinafter, the present invention will be described by way of embodiments.

Fig. 1 is a block diagram showing the construction of one embodiment of a vibration detecting device for use in carrying out the method of the present invention.

Fig. 2 is a graph showing the frequency-gain characteristic of an integrator in the embodiment of the present invention.

Fig. 3 is a graph showing the frequency-velocity, acceleration characteristic in the embodiment of the present invention.

Fig. 4 is a block diagram showing the construction of a vehicle load simulator of the present invention.

Fig. 5 is a schematic view showing a motor-bicycle in the load simulation by the vehicle load simulator of the present invention.

Fig. 6 is a view showing the relationship between oscillators of a motor-bicycle in the load simulation by the vehicle load simulator of the present invention.

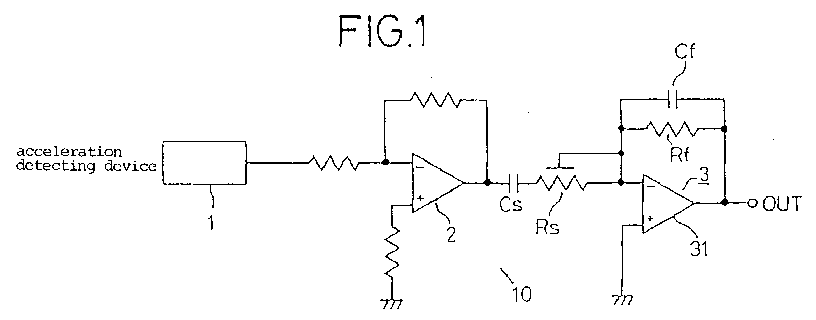

In Fig. 1, the reference numeral 10 designates one embodiment of a vibration detecting device of the present invention. The vibration detecting device 10 includes an acceleration detecting device 1, an inverting amplifier 2 with a gain "1" for inverting and amplifying the output from the acceleration detecting device 1, and an integrator 3 for integrating the amplified output from the inverting amplifier 2. The output from the integrator 3 is taken as the vibration detecting output. The reference numeral 31 designates an operational amplifier constituting a portion of the integrator 3. The reason why the inverting amplifier 2 is provided on the input side of the integrator 3 is that the operational amplifier 31 performs the inverting amplification, so that the polarity of the output of the acceleration detecting device 1 is made to correspond to the polarity of the output of the integrator 3.

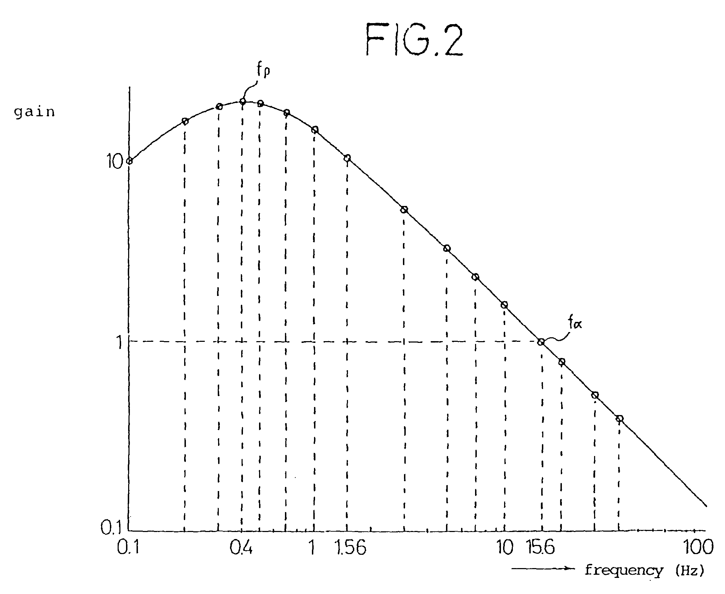

The frequency-gain characteristic of the integrator 3 in this embodiment is shown in Fig. 2. The above characteristics are measured using the acceleration detecting device 1 for generating an output of 10 V at an acceleration level of 50 (G); an input side resistance Rs of about 10.4 kΩ; a feedback resistance Rf of 270 kΩ; an input capacitor Cs of 47 µF; and a feedback capacitor Cf of 1 µF.

In Fig. 2, the gain is decreased at 6 dB/oct (20 dB/dec) as the frequency is increased from the specified frequency fₚ (0.7 Hz, in this figure). The frequency f_{α} corresponding to the gain "1" is specified at the value of [1/(2π×cf×Rs)]. In this case, by calculation and by actual measurement, the gain "1" is obtained at a frequency of about 15.6 Hz, and the gain "0.1" is obtained at a frequency of about 156 Hz. The frequency range shown by this straight line portion sufficiently covers the frequency range of vibration used in the vehicle load simulator.

Letting <a> be an amplitude, and a displacement <x> be a sine-wave (a sin ωt), the velocity is expressed by (a ω cos ωt), and the acceleration is expressed by (-a ω² sin ωt); and the maximum value of the velocity is expressed by [a ω (m/sec) = 2 πfa], and the maximum value of the acceleration is expressed by [a ω² (m/sec²) = 4 π²f²a/9.8 (G). The vibration applied to a vehicle running along a rough pavement is known to have an acceleration of 50 (G) and a frequency ranging from 15 to 40 Hz. In the case of a motor-bicycle, since the stroke of a suspension is longer than that of an automatic four-wheeled vehicle, the frequency at the same acceleration tends to be lower than that of the automatic four-wheeled vehicle.

When the acceleration is 50 (G) and the frequency is in the range from 14 to 40 Hz, the amplitude <a> is in the range of 18 mm ≦ a ≦ 50 mm. Here, when the frequency is 40 Hz and the amplitude <a> is 18 mm, the velocity is about 4.5 (m/sec). On the other hand, when the frequency is 15 Hz and the amplitude <a> is 50 mm, the velocity is about 4.7 (m/sec). The acceleration of 50 (G) is thus made to correspond to the velocity of 5 (m/sec). Accordingly, when the maximum acceleration is taken as 50 (G), it is converted into the maximum velocity of 5 (m/sec).

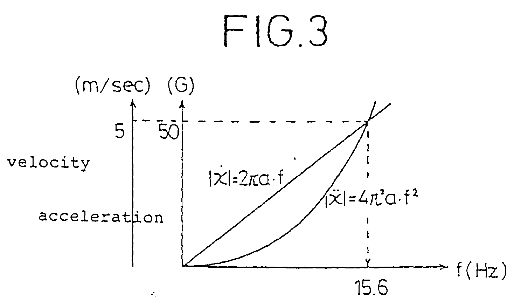

Fig. 3 shows the relationship between the frequency-velocity and acceleration, wherein the acceleration of 50 (G) is made to correspond to the velocity of 5 (m/sec) and the amplitude is made constant. As is apparent from this figure, the frequency of vibration at the time when the velocity is in conformity with the acceleration is about 15.6 Hz.

Accordingly, when the frequency is 15.6 Hz and the acceleration is 50 (G), the acceleration detecting device 1 may supply 100% of the output, and also the integrator 3 may supply 100% of the output, that is, the gain of the integrator 3 may be set "1" at the frequency of 15.6 Hz. Namely, at the vibration with a frequency of 15.6 Hz, when the acceleration detecting device 1 detects the acceleration of 50 (G), it supplies 100% of the output. The integrator 3 receives 100% of the output from the acceleration detecting device 1 and supplies 100% of the output. This is realized by a method wherein the input resistance Rs and the capacitance of the feedback capacity Cf are set at 10.4 KΩ and 1 µF, respectively, thus obtaining the frequency-gain characteristic of the integrator 3 shown in Fig. 2.

The acceleration and the velocity corresponding to the vibration with a frequency of 1 Hz and an amplitude of 10 mm are about 0.04 (G) [= (4π²×1²×10)/(1000 ×9.8)] and about 0.063 (m/sec)[2π×1×10/1000], respectively. In the acceleration detecting device 1 of a type in which the input/out characteristic is linear and 100% of the output is generated against the acceleration of 50 (G), the output against the vibration with a frequency of 1 Hz and an amplitude of 10 mm, that is, the acceleration of about 0.04 (G) becomes 0.08% of the full scale, which is very small.

However, the integrator 3 receives the output (= 100% output) from the acceleration detecting device 1 against the acceleration of 50 (G), and outputs the full scale (= 100%) value, that is, the velocity of 5 m/sec. Here, the vibration with a frequency of 1 Hz and an amplitude of 10 mm, that is, the acceleration of 0.04 (G) corresponds to the velocity of 0.063 m/sec. The output of the integrator 3 against 0.063 m/sec becomes 1.26% of the full scale. Accordingly, as compared with the ratio of the output to the full scale in the acceleration detecting device 1 is 0.08%; the ratio of the output to the full scale in the integrator 3 becomes 1.26%, that is, it is increased by about 16 times.

As shown in Fig. 3, since the output of the acceleration detecting device 1 is integrated by the integrator 3 and is fetched, the change in the output level of the integrator to the change in the unit frequency is increased on the side of low frequencies of vibration; while it becomes smaller on the side of high frequencies of vibration.

For example, near the frequency of 100 Hz, the output from the integrator 3 becomes about 0.16 m/sec; accordingly, the ratio of the output to the full scale in the integrator 3 against that in the acceleration detecting device 1 becomes 1/6.4. This does not deteriorate the reproduction in the vehicle load simulator, because an acceleration signal in a high frequency area is large.

The reason for this is as follows: As is known from many results of measuring a road surface, in the irregular components being high in the spatial frequency, that is, being short in the pitch of one cycle, the amplitude becomes smaller; for example, in the irregular components having the spatial frequency being increased by about 100 times, the amplitude becomes about 1/100 times. Table 1 shows the ratio of the acceleration output to the full scale against the ratio of the velocity output to the full scale, wherein the acceleration is 100% = 50 (G), the velocity is 100% = 5 m/sec, the frequency and amplitude of vibration caused by the irregular components of the road surface are 1 Hz and ± 10 mm or 100 Hz and ± 0.1 mm.

**Table 1**

| road condition | 1 Hz, ±10mm | 100 Hz, ±0.1mm |
|---|---|---|
| ratio of acceleration output to full scale (100%=50G) | 0.04% | 8% |
| ratio of velocity output to full scale (100%=5m/sec) | 1.26% | 1.4% |

As is apparent from Table 1, the acceleration output to the full scale becomes 0.04% and 8% at the vibration components (1 Hz, ±10mm) and (100 Hz, ±0.1mm), respectively. At the latter vibration component, the output to the full scale is large, and can be sufficiently measured. On the contrary, at the former vibration component, the output to the full scale is very small, and is difficult to be measured.

On the other hand, the velocity output to the full scale becomes 1.26% and 1.4% at the vibration components (1 Hz, ±10mm) and (100 Hz, ±0.1mm), respectively. At the latter vibration component, the ratio of the output to the full scale is small compared with the case of the acceleration output; however, the output is sufficient to be measured. On the contrary, at the former vibration component, the ratio of the output to the full scale is large compared with the case of the acceleration output. Therefore, against both the vibration components, it is desirable to convert the acceleration output into the velocity output.

Next, there will be described one embodiment of a vehicle load simulator using the vibration detecting device of the present invention.

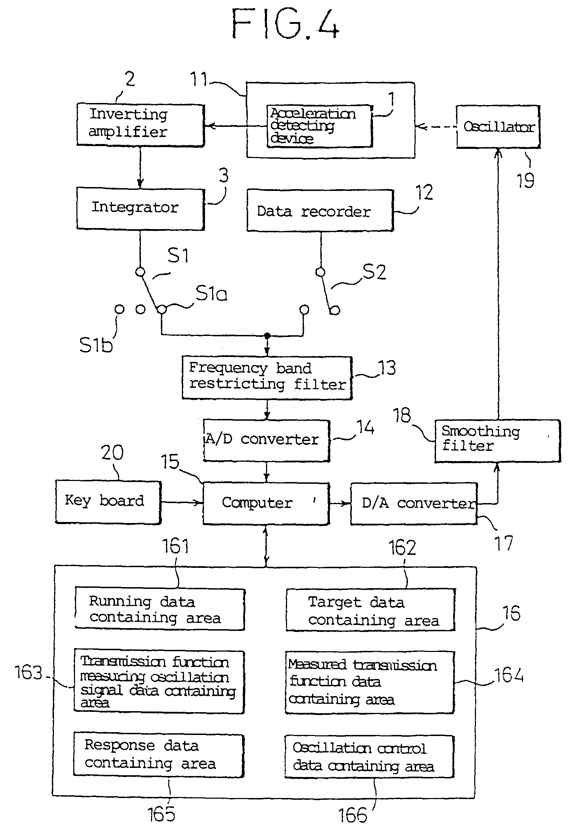

Fig. 4 is a block diagram showing one embodiment of the vehicle load simulator of the present invention.

As is shown in Fig. 4, the output from an acceleration detecting device 1 is supplied to an integrator 3 by way of an inverting amplifier 2. The output from the integrator 3 is supplied to a data recorder 12 composed of a magnetic recording reproducing device by way of a contact Sla of a switch S1 having an open position and a switch S2. Thus, the output from the integrator 3, that is, the acceleration data converted into the velocity data is recorded in the data recorder 12.

The output from the integrator 3 is supplied to a frequency band restricting filter 13 by way of a contact S1b of the switch S1 for preventing return-noise, to be restricted in its frequency band. The output from the frequency band restricting filter 13 is input in an A/D converter 14, to be converted into digital data. Similarly, the output of the integrator 3 read from the data recorder 12 is supplied to the A/D converter 14 by way of the switch S2 and the frequency band restricting filter 13, so that it is restricted in its frequency band and is converted into digital data.

The digital data converted by the A/S converter 14 is supplied to a computer 15, and is contained in a memory 16 while being controlled by the computer 15 on the basis of a command from an indicating key provided on a key board 20. The digital data (oscillation control data or the like) read from the memory 16 are supplied to a D/A converter 17, to be converted into analog signals. The analog signals are supplied to an oscillator 19 by way of a smoothing filter 18 and controls the oscillation by the oscillator 19.

On the other hand, the memory 16 includes a running data containing area 161 for containing data from the integrator 3 during running, a target data containing area 162, a transmission function measuring oscillation signal data containing area 163, a measured transmission function data containing area 164, a response data containing area 165, and an oscillation control data containing area 166.

The output of the acceleration of a vehicle running along a road surface is detected by the acceleration detecting device 1. The output from the acceleration detecting device 1 is input in the integrator 3 by way of an inverting amplifier 2. In such a state, the switch 1 is set to be turned on the contact Sla side, and the switch S2 is set to be closed. Accordingly, the output from the integrator 3 is recorded in a magnetic tape of the data recorder 12.

Next, the switch S1 is set to be open, and the switch S2 is set to be left closed. In such a state, the data recorded in the magnetic tape of the data recorder 12 are read out and are output as analog signals. The analog signals are restricted in the frequency bands by the frequency band restricting filter 13, and are converted into digital data by the A/D converter 14. In this case, since the signals are restricted in the frequency bands, there is not generated any return-noise. The A/D converted digital data are contained in the running data containing area 161 by the computer 15.

The data contained in the running data containing area 161 are subjected to pre-treatment for erasing unnecessary portions of data and unnecessary portions of frequency components, and are transmitted and contained into the target data containing area 162 as target data. The data contained in the running data containing area 161 may be transmitted into an operating area in the memory 16 to be processed, and contained in the running data containing area 161 again. In this way, the running data containing area 161 can serve as the target data containing area.

After the above processing is completed, the vehicle load simulation is started.

Here, the reference numeral 11 designates an automatic four-wheeled vehicle to be oscillated.

In such a state, the vehicle to be load-simulated is mounted on a testing base, and the switch S1 is set to be turned on the contact S1b side, and the switch S2 is set to open.

Next, oscillation signal data for measuring a transmission function, for example, burst signal data such as white noise are read from the transmission function measuring oscillation signal data containing area 163, and are converted into analog signals by the D/A converter 17. The analog signals are smoothed by the smoothing filter 18 and are supplied to the oscillator 19. Thus, the vehicle is oscillated on the basis of the transmission function measuring oscillation signal data. The vibration of the vehicle due to the above oscillation is detected by the acceleration detecting device 1, being inverted by the inverting amplifier 2, and is integrated by the integrator 3. The output from the integrator 3 is read out by the computer 15 by way of the frequency band restricting filter 13 and the A/D converter 14. On the basis of the signal data thus read out and the transmission function measuring oscillation signal data, the transmission function is calculated. The calculated transmission function is contained in the measured transmission function data containing area 164.

Subsequently, the measured transmission function data contained in the measured transmission function data containing area 164 and the target data contained in the target data containing area 162 are read out. Oscillation control data are produced on the basis of both the data, and are contained in the oscillation control data containing area 166. The oscillation control data thus contained are read out, and are converted into analog signals by the D/A converter 17. The analog signals are smoothed by the smoothing filter 18 and are supplied to the oscillator 19. By oscillation signals on the basis of the oscillation control data, the automatic four-wheeled vehicle 11 is oscillated by way of the oscillator 19. The output of the acceleration detecting device 1 due to this oscillation is integrated by the integrator 3. The output from the integrator 3 is read out by the computer 15 and is contained in the response data containing area 165.

The response data is compared with the target data, and the oscillation control data is corrected on the basis of the difference between the response data and the target data and the transmission function. The corrected oscillation control data are contained in the oscillation control data containing area 166. Next, the oscillation is performed on the basis of the corrected oscillation control data, to correct the oscillation control data. The correction is repeated until the response data corresponds to the target data. The oscillation control data at the time when the response data corresponds to the target data are contained in the oscillation control data containing area 166 as the final oscillation control data.

Subsequently, the oscillation is performed on the basis of the oscillation control data contained in the oscillation control data containing area 166, and the load simulation of the vehicle is performed.

Although there has been described the case having one acceleration detecting device 1, in the case of an automatic four-wheeled vehicle 11, the acceleration detecting devices 1 are provided near respective axle shafts. Accordingly, corresponding parts are required in the number being more than that of the acceleration detecting devices, except for the computer 15, memory 16 and key board 20. However, low and high frequencies of vibration can be detected by the acceleration detecting devices having one kind.

The above construction is basically applied to the case of a motor-bicycle.

### [0054]

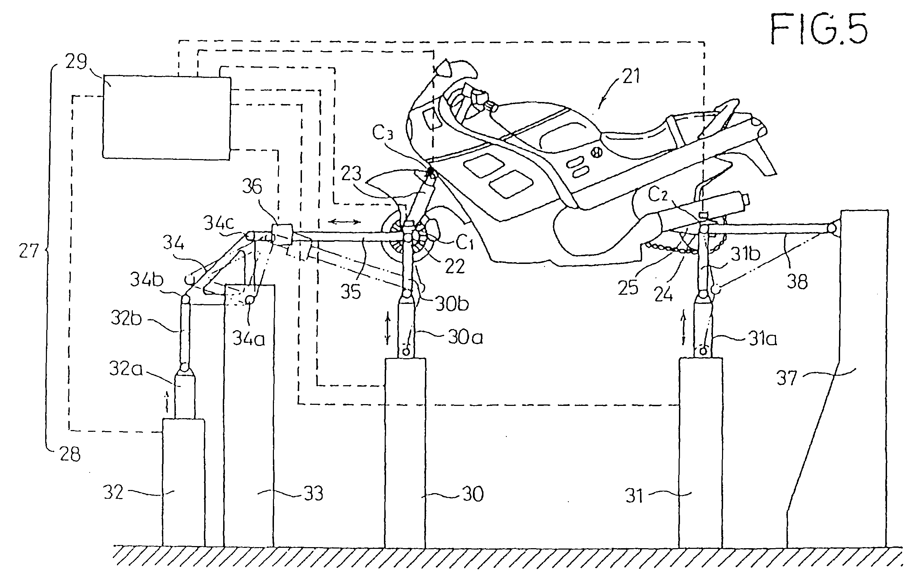

Fig. 5 is a schematic view showing the load simulation for a motor-bicycle.

The reference numeral 21 designates a motor-bicycle to be load-simulated, wherein wheels are previously removed. The reference numeral 22 designates an axle shaft of a front wheel rotatably supported by a body frame, which is supported by a telescopic type suspension 23. The reference numeral 24 shows an axle shaft of a rear wheel, and which is mounted on a rear fork 25 swingingly supported on a rear cushion (not shown) assembled with a link mechanism.

The reference numeral 27 designates an oscillating means for directly oscillating the axle shafts 22 and 24 of the motor-bicycle 21, and which includes an oscillation drive unit 28 for actually oscillating the axle shaft 22 and 24 and a control unit 29 for controlling the oscillation drive unit 28. The control unit 29 is a functioning means within the computer 15 (see Fig. 4).

The oscillation drive unit 28 includes an oscillator 30 for vertically oscillating the axle shaft 22, an oscillator 31 for vertically oscillating the axle shaft 24, and an oscillator 32 for oscillating the axle shaft 22 in the longitudinal direction. Each of the oscillators 30, 31 and 32 may be constituted of, for example a double-acting hydraulic cylinder capable of exerting tensile and compression forces.

One-sided ends of connecting rods 30b and 31b are pin-connected to the leading edges of piston rods 30a and 31a of the oscillators 30 and 31, respectively. The other ends of the connecting rods 30b and 31b are pin-connected to the axle shaft 22 and the rear fork 25, respectively.

A connecting rod 32b is pin-connected to the leading edge of a piston rod 32a of the oscillator 32. One end 34b of a swing plate 34 is pin-connected to the leading edge of the connecting rod 32b. The swing plate 34 is formed in a triangular shape as seen from the side, and a central base end portion 34a is swingingly supported on the upper portion of a support body 33. The other end 34c of the swing plate 34 is pin-connected to one end of an oscillating rod 35 extending substantially in the horizontal direction, and the other end of the oscillating rod 35 is pin-connected to the axle shaft 22. Namely, by vertically extending/contracting the piston rod 32a of the oscillator 32, the axe shaft 22 is oscillated in the longitudinal direction by way of the swing plate 34 and the oscillating rod 35.

A load detecting means 36 is provided on the oscillating rod 35. In addition, the reference numeral 37 designates a rigid reaction jig for restricting the longitudinal movement of the body of the motor-bicycle 21. The axle shaft 24 is connected to the reaction jig 37 by way of a link bar 38.

The acceleration detecting devices 1 (shown by the reference numerals C1 and C2 in the figure) of the vibration detecting device 10 of the present invention are mounted on the suspension 23 and the rear fork 25, respectively. A strain detecting device C3 is stuck on the suspension.

The output from each of the acceleration detecting devices C1 and C2 is supplied to the integrator by way of the inverting amplifier, to be integrated. It is then converted into digital data by the filter, and is supplied to the control unit 29. The output of each of the strain detecting device C3 and the load detecting device 36 is converted into digital data by the filter, and is supplied to the control unit 29.

Here, each of the oscillators 30, 31, and 32 are subjected to displacement control. The displacement control method enables the control of high speed and high acceleration compared with a load control method, and thereby can enhance the accuracy of reproduction of the load applied from a road surface upon actual running.

The longitudinal movement of the axle shaft 24 is restricted by the link bar 39 which is pin-connected to the reaction jig 37. When the oscillators 30 and 31 are operated, the left end portion of the link bar 38 depicts a circular-arc locus, and thereby the body is possibly applied with unexpected longitudinal compress or tensile load. To solve such inconvenience, the following tracer control is performed. As a result, the oscillators 30, 31 and 32, while being supported by the reaction jig 37 with a simple structure, enables the control of high speed displacement.

The control unit 29 supplies the command to the oscillator 32 such that the value from the load detecting means 36 becomes zero. Next, on the basis of a command from the control unit 29, the oscillators 30 and 31 are operated such that the lower ends of the piston rods 30a and 31a are moved at low speed from the lowermost points to the oscillation neutral points (moved at the speed by means of which the value of the load detecting means 36 is kept at zero by operating the oscillator 32 to trace the oscillators 30 and 31).

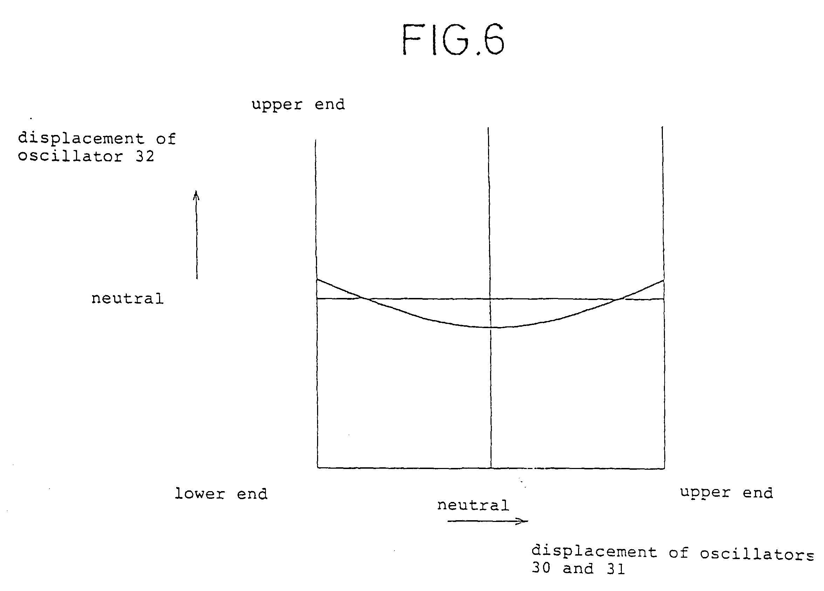

The locus of the piston rod 32a of the oscillator 32 is converted into digital data, which are contained in the memory 16. Fig. 6 shows the memory map. In this way, the displacement of the oscillator 32 in association with the displacements of the oscillators 30 and 31 is contained in the memory 16. The oscillator 32 is then switched in the control mode into the displacement control along the memory map. The oscillators 30 and 31 are operated, and the oscillator 32 is operated along the map on the basis of the displacements of the piston rods 30a and 31a until the piston rod 32a reaches the neutral position. After that, the oscillator 32 is stopped in its control along the map, and the oscillators 30, 31, and 32 are operated on the basis of the oscillation control data, so that the motor-bicycle 21 is applied with the actually running load.

In addition, even when the oscillators 30, 31 and 32 are stopped, the oscillator 32 is stopped while being operated along the above-described map.

The motor-bicycle 21 is then oscillated in the same manner as in the case of the automatic four-wheeled vehicle 11 described with reference to Fig. 4. The oscillation is omitted.

As described above, a vibration detecting device includes an acceleration detecting device mounted on a vehicle and an integrator for integrating the output from the acceleration detecting device, wherein the output from the acceleration detecting device is converted into a vibration detecting output by the integrator. Thus, a detected acceleration output is converted into a velocity signal. This makes it possible to easily detect low frequencies of vibration compared with the case using the detected acceleration signal, and to detect a wide range of frequencies of vibration only by one acceleration detecting device.

Moreover, by supplying the detected acceleration output to the integrator by way of an inverting amplifier, the polarity of the output from the integrator can be made to correspond to that of the acceleration detecting device.

In the vehicle load simulator using the vibration detecting device of the present invention, the number of velocity detecting devices are reduced and the number of channels for the detected velocity output is reduced. In the case of conversion into digital data, there is not increased the numbers of A/D converters, D/A converters for driving an oscillator, correcting circuits for correcting the D/A conversion output on the basis of a transmission function, and the like. Moreover, in the case where the correction on the basis of a transmission function is performed by a computer, the load on calculation and the data area are not increased linearly with the number of channels thereby preventing the deterioration of the response of a computer control system, and further the program is prevented from becoming complex. Moreover, by provision of the integrator for integrating the output of the acceleration detecting device, the conventional vehicle load simulator can be used as it is.

Explanation of Symbols
1: acceleration detecting device, 2: inverting amplifier 3: integrator, 13, 18: filter, 14: A/D converter 15: computer, 16: memory, 17: D/A converter, 19: oscillator, S1, S2: switch

## Claims

1. A method of simulating running conditions of a vehicle by use of a vehicle load simulator including controllable oscillator means (19) for applying vibrational forces to a vehicle (11) mounted on said oscillator means (19),
said method comprising the steps of
- detecting vibrations of a vehicle (11) during actual running of said vehicle by means of an acceleration detecting device (1) mounted on said vehicle (11) and recording a signal indicative of vibration based on the output of said acceleration detecting device (1),
- mounting said vehicle (11) with the acceleration detecting device (1) attached thereto on said oscillator means (19) in said vehicle load simulator, and
- applying vibrational forces to the vehicle (11) mounted on said oscillator means (19) in said vehicle load simulator while controlling said oscillator means (19) by means of an oscillation control signal obtained on the basis of said previously recorded signal indicative of vibration and on response data detected by means of said acceleration detecting device (1) during application of vibrational forces to the vehicle (11) by said oscillator means (19), in order to reproduce said vibrations previously detected during actual running,
characterized in that for providing said signal indicative of vibration during actual running of said vehicle (11) and for providing said response data during application of vibrational forces to said vehicle (11) by said oscillator means (19) in said vehicle load simulator the output of said acceleration detecting device (1) is integrated by means of an integrator (3), wherein the output of said acceleration detecting device (1) is converted by said integrator (3) into an output indicative of vibration.

2. A method according to claim 1, wherein said integrator (3) includes an operational amplifier (31) performing inverting amplification, and wherein an inverting amplifier (2) is connected to said acceleration detecting device (1) for inverting the output of said acceleration detecting device (1) and supplying the inverted output to said integrator (3).

3. A method according to claim 1, comprising the steps of
- measuring a transmission function of a system including the oscillator means (19), the vehicle (11) mounted on the oscillator means (19), the acceleration detection device (1) and the integrator (3), and generating an oscillation control signal for controlling said oscillator means (19) on the basis of said transmission function and the difference between said response data and said signal indicative of vibration, to apply said vibrational forces to said vehicle (11), said step of measuring the transmission function including the step of applying vibrational forces to said vehicle (11) mounted on said oscillator means (19) by controlling said oscillator means (19) on the basis of transmission function measuring oscillation data, and detecting the output of said integrator (3).

4. A vehicle load simulator for carrying out the method according to one of the claims 1 - 3, comprising
- controllable oscillator means (19) for applying vibrational forces to a vehicle (11) mounted on the vehicle load simulator in order to reproduce vibrations previously detected during actual running of said vehicle (11) in a field test,
- control means (13 - 18) generating and outputting an oscillation control signal for controlling said oscillator means (19),
- a vibration detecting device (10) adapted to be mounted on said vehicle (11) and including an acceleration detecting device (1) and memory means (12) for storing the output of said vibration detecting device (10) during actual running of said vehicle (11) in a field test,
- said vibration detecting device (10) mounted on said vehicle (11) being adapted to be connected to said control means (13 - 18) in order to alternatively read out said output of the vibration detecting device (10) from said memory means (12) into said control means (13 - 18) and to provide a vibration response output during application of vibrational forces to said vehicle (11) by said oscillator means (19) in said vehicle load simulator,
- said control means (13 - 18) being adapted to compare the output stored by said memory means (12) with said vibration response output from said vibration detecting device (10) in order to generate the oscillation control signal for controlling said oscillator means (19) to reproduce vibrations according to vibrations previously detected during actual running of said vehicle (11) in the field test,
characterized in that
said vibration detecting device (10) comprises an integrator (3) for integrating the output of said acceleration detecting device (1),
wherein the output of said acceleration detecting device (1) is converted by said integrator (3) into an output of the vibration detecting device (10) indicative of vibration.

5. A vehicle load simulator according to claim 4, further including a first inverting operational amplifier (2) for inverting an amplifying the output from said acceleration detecting device (1) and supplying the inverted output to said integrator (3).

6. A vehicle load simulator according to claim 5, wherein said integrator (3) includes a second inverting operational amplifier (31), so that the polarity of the output of the integrator (3) corresponds to the polarity of the detected acceleration.

7. A vehicle load simulator according to claim 5, wherein said integrator (3) has a frequency-gain characteristic such that the gain of the integrator (3) equals unity at some frequency within the frequency range of 15 - 40 Hz.

8. A vehicle load simulator according to claim 7, wherein said integrator (3) has a frequency-gain characteristic such that the gain of the integrator (3) is unity at a frequency of 15.6 Hz.

9. A vehicle load simulator according to one of claims 4 - 8, wherein said acceleration detecting device (1) generates an output of 10 V at an acceleration of 50 G.

10. A vehicle load simulator according to claim 5, wherein said first inverting amplifier (2) has a gain of 1.

## Patentansprüche

1. Verfahren zum Simulieren von Fahrzuständen eines Fahrzeugs durch Verwendung eines Fahrzeuglastsimulators, der ein steuerbares Oszillatormittel (19) zum Anlegen von Schwingungskräften an ein an dem Oszillatormittel (19) angebrachtes Fahrzeug (11) umfaßt,
wobei das Verfahren die Schritte aufweist:
- Erfassen von Schwingungen eines Fahrzeugs (11) während wirklicher Fahrt des Fahrzeugs mittels einer an dem Fahrzeug (11) angebrachten Beschleunigungserfassungsvorrichtung (1) und Aufzeichnen eines Schwingung anzeigenden Signals auf der Basis der Ausgabe der Beschleunigungserfassungsvorrichtung (1),
- Anbringen des Fahrzeugs (11) mit daran befestigter Beschleunigungserfassungsvorrichtung (1) an dem Oszillatormittel (19) in dem Fahrzeuglastsimulator,
- Anlegen von Schwingungskräften an das Fahrzeug (11), das an dem Oszillatormittel (19) in dem Fahrzeuglastsimulator angebracht ist, während Steuerung des Oszillatormittels (19) mittels eines Oszillationssteuersignals, das auf der Basis des zuvor aufgezeichneten Schwingung anzeigenden Signals sowie von Reaktionsdaten erhalten wird, die mittels der Beschleunigungserfassungsvorrichtung (1) während des Anlegens von Schwingungskräften an das Fahrzeug (11) durch das Oszillatormittel (19) erfaßt werden, um die zuvor während wirklicher Fahrt erfaßten Schwingungen zu reproduzieren,
dadurch gekennzeichnet, daß zum Vorsehen des Signals, das Schwingung während wirklicher Fahrt des Fahrzeugs (11) anzeigt, und zum Vorsehen der Reaktionsdaten während des Anlegens von Schwingungskräften an das Fahrzeug (11) durch das Oszillatormittel (19) in dem Fahrzeuglastsimulator die Ausgabe der Beschleunigungserfassungsvorrichtung (1) mittels eines Integrators (3) integriert wird, wobei die Ausgabe der Beschleunigungserfassungsvorrichtung (1) durch den Integrator (3) in eine Schwingung anzeigende Ausgabe gewandelt wird.

2. Verfahren nach Anspruch 1, wobei der Integrator (3) einen invertierend verstärkenden Operationsverstärker (31) umfaßt, und wobei ein Invertierverstärker (2) mit der Beschleunigungserfassungsvorrichtung (1) verbunden ist, um die Ausgabe der Beschleunigungserfassungsvorrichtung (1) zu invertieren und die invertierte Ausgabe dem Integrator (3) zuzuführen.

3. Verfahren nach Anspruch 1, umfassend die Schritte:
- Messen einer Übertragungsfunktion eines Systems, welches das Oszillatormittel (19), das an dem Oszillatormittel (19) angebrachte Fahrzeug (11), die Beschleunigungserfassungvorrichtung (1) und den Integrator (3) umfaßt, und Generieren eines Oszillationssteuersignals zum Steuern des Oszillatormittels (19) auf der Basis der Übertragungsfunktion und der Differenz zwischen den Reaktionsdaten und dem Schwingung anzeigenden Signal, um die Schwingungskräfte an das Fahrzeug (11) anzulegen, wobei der Schritt des Messens der Übertragungsfunktion den Schritt umfaßt, Schwingungskräfte an das am Oszillatormittel (19) angebrachte Fahrzeug (11) anzulegen, durch Steuerung des Oszillatormittels (19) auf der Basis der Übertragungsfunktionsmessungs-Oszillationsdaten und Erfassen der Ausgabe des Integrators (3).

4. Fahrzeuglastsimulator zur Durchführung des Verfahrens nach einem der Ansprüche 1 bis 3, umfassend:
ein steuerbares Oszillatormittel (19) zum Anlegen von Schwingungskräften an ein an einem Fahrzeuglastsimulator angebrachtes Fahrzeug (11), um Schwingungen, die zuvor während tatsächlicher Fahrt des Fahrzeugs (11) in einem Feldtest erfaßt wurden, zu reproduzieren,
- Steuermittel (13 - 18), die ein Oszillationssteuersignal zum Steuern des Oszillatormittels (19) generieren und ausgeben,
- eine Schwingungserfassungsvorrichtung (10), die zur Anbringung an dem Fahrzeug (11) ausgelegt ist und eine Beschleunigugnserfassungsvorrichtung (1) sowie ein Speichermittel (12) zum Speichern der Ausgabe der Schwingungserfassungsvorrichtung (10) während wirklicher Fahrt des Fahrzeugs (11) in einem Feldtest umfaßt,
- wobei die an dem Fahrzeug (11) angebrachte Schwingungserfassungsvorrichtung (10) dazu ausgelegt ist, mit den Steuermitteln (13 - 18) verbunden zu werden, um alternativ die Ausgabe der Schwingungserfassungsvorrichtung (10) aus dem Speichermittel (12) in die Steuermittel (13 - 18) einzulesen und eine Schwingungsantwortausgabe während des Anlegens von Schwingungskräften an das Fahrzeug (11) durch das Oszillatormittel (19) in dem Fahrzeuglastsimulator vorzusehen,
- wobei das Steuermittel (13 - 18) dazu ausgelegt ist, die von dem Speichermittel (12) gespeicherte Ausgabe mit der Schwingungsantwortausgabe von der Schwingungserfassungsvorrichtung (10) zu vergleichen, um das Oszillationssteuersignal zum Steuern des Oszillatormittels (19) zu erzeugen, um Schwingungen zu reproduzieren, die während wirklicher Fahrt des Fahrzeugs (11) in einem Feldtest erfaßten Schwingungen entsprechen,
dadurch gekennzeichnet, daß
die Schwingungserfassungsvorrichtung (10) einen Integrator (3) zum Integrieren der Ausgabe der Beschleunigungserfassungsvorrichtung (1) aufweist, wobei die Ausgabe der Beschleunigungserfassungsvorrichtung (1) durch den Integrator (3) in eine Schwingung anzeigende Ausgabe der Schwingungserfassungsvorrichtung (10) gewandelt wird.

5. Fahrzeuglastsimulator nach Anspruch 4, der ferner einen ersten invertierenden Operationsverstärker (2) aufweist, um eine Verstärkung der Ausgabe von der Beschleunigungserfassungsvorrichtung (1) zu invertieren und die invertierte Ausgabe dem Integrator (3) zuzuführen.

6. Fahrzeuglastsimulator nach Anspruch 5, wobei der Integrator (3) einen zweiten invertierenden Operationsverstärker (31) umfaßt, sodaß die Polarität der Ausgabe des Integrators (3) der Polarität der erfaßten Beschleunigung entspricht.

7. Fahrzeuglastsimulator nach Anspruch 5, wobei der Integrator (3) eine derartige Frequenz-Verstärkungs-Charakteristik hat, daß die Verstärkung des Integrators (3) bei einer bestimmten Frequenz innerhalb des Frequenzbereichs 15 - 40 Hz gleich eins ist.

8. Fahrzeuglastsimulator nach Anspruch 7, wobei der Integrator (3) eine derartige Frequenz-Verstärkungs-Charakteristik hat, daß die Verstärkung des Integrators (3) bei einer Frequenz von 15,6 Hz gleich eins ist.

9. Fahrzeuglastsimulator nach einem der Ansprüche 4 - 8, wobei die Beschleunigungserfassungsvorrichtung (1) bei einer Beschleunigung von 50g eine Ausgabe von 10V erzeugt.

10. Fahrzeuglastsimulator nach Anspruch 5, wobei der erste invertierende Verstärker (2) eine Verstärkung von 1 besitzt.

## Revendications

1. Procédé de simulation de conditions de roulement d'un véhicule par utilisation d'un simulateur de charge d'un véhicule comprenant des moyens d'oscillation pouvant être commandés (19) destinés à appliquer des forces de vibration à un véhicule (11) monté sur lesdits moyens d'oscillation (19)
ledit procédé comprenant les étapes de :
- détection des vibrations d'un véhicule (11) au cours du roulement réel dudit véhicule au moyen d'un dispositif de détection d'accélération (1) monté sur ledit véhicule (11), et enregistrement d'un signal indicateur de vibration sur la base de la sortie dudit dispositif de détection d'accélération;
- montage dudit véhicule (11), le dispositif de détection d'accélération (1) étant fixé à celui-ci, sur lesdits moyens d'oscillation (19) dans ledit simulateur de véhicule; et
- application de forces de vibration au véhicule (11) monté sur lesdits moyens d'oscillation (19) dans ledit simulateur de charge de véhicule, tout en commandant lesdits moyens d'oscillation (19) au moyen d'un signal de commande d'oscillation obtenu sur la base dudit signal indicateur de vibration enregistré au préalable et de données en réponse détectées au moyen dudit dispositif de détection d'accélération (1) au cours de l'application de forces de vibration au véhicule (11) par lesdits moyens d'oscillation (19), de manière à reproduire lesdites vibrations détectées au préalable au cours du roulement réel,
caractérisé en ce que, pour fournir ledit signal indicateur de vibration au cours du roulement réel dudit véhicule (11) et pour fournir lesdites données en réponse au cours de l'application de forces de vibration au dit véhicule (11) par les moyens d'oscillation (19) dans ledit simulateur de charge de véhicule, la sortie dudit dispositif de détection d'accélération (1) est intégrée au moyen d'un intégrateur (3), dans lequel la sortie dudit dispositif de détection d'accélération (1) est convertie par ledit intégrateur (3) en une sortie indicatrice de vibration.

2. Procédé selon la revendication 1, dans lequel ledit intégrateur (3) comprend un amplificateur de fonctionnement (31) qui réalise une amplification en inversion, et dans lequel un amplificateur inverseur (2) est connecté au dit dispositif de détection d'accélération (1), afin d'inverser la sortie dudit dispositif de détection d'accélération (1) et de fournir la sortie inversée au dit intégrateur (3).

3. Procédé selon la revendication 1, comprenant les étapes de :
- mesure d'une fonction de transmission d'un système comprenant les moyens d'oscillation (19), le véhicule (11) monté sur les moyens d'oscillation (19), le dispositif de détection d'accélération (1) et l'intégrateur (3), et génération d'un signal de commande d'oscillation destiné à commander lesdits moyens d'oscillation (19) sur la base de ladite fonction de transmission et de la différence entre lesdites données en réponse et ledit signal indicateur de vibration, afin d'appliquer lesdites forces de vibration au dit véhicule (11), ladite étape de mesure de la fonction de transmission comprenant l'étape d'application de forces de vibration au dit véhicule (11) monté sur lesdits moyens d'oscillation (19) par la commande desdits moyens d'oscillation (19) sur la base de la fonction de transmission qui mesure les données d'oscillation, et la détection de la sortie dudit intégrateur (3).

4. Simulateur de charge de véhicule destiné à mener à bien le procédé selon l'une des revendications 1 - 3, comprenant :
- des moyens d'oscillation pouvant être commandés (19) destinés à appliquer des forces de vibration à un véhicule (11) monté sur le simulateur de charge de véhicule de manière à reproduire des vibrations détectées au préalable au cours d'un roulement réel dudit véhicule (11) dans un essai sur le terrain;
- des moyens de commande (13 - 18) générant et délivrant un signal de commande d'oscillation destiné à commander lesdits moyens d'oscillation (19);
- un dispositif détecteur de vibration (10) adapté pour être monté sur ledit véhicule (11) et comprenant un dispositif de détection d'accélération (1) et des moyens de mémoire (12) destinés à stocker la sortie dudit dispositif de détection de vibration (10) au cours d'un roulement réel dudit véhicule (11) dans un essai sur le terrain;
- ledit dispositif de détection de vibration (10) monté sur ledit véhicule (11) étant adapté pour être connecté aux dits moyens de commande (13 - 18) de manière à délivrer tour à tour ladite sortie du dispositif de détection de vibration (10) à partir desdits moyens de mémoire (12) aux dits moyens de commande (13 - 18), et à fournir une sortie de vibration en réponse au cours de l'application des forces de vibration au dit véhicule (11) par lesdits moyens d'oscillation (19) dans ledit simulateur de charge de véhicule;
- lesdits moyens de commande (13 - 18) étant adaptés pour comparer la sortie stockée par lesdits moyens de mémoire (12) à ladite sortie de vibration en réponse en provenance dudit dispositif de détection de vibration (10), de manière à générer le signal de commande d'oscillation destiné à commander lesdits moyens d'oscillation (19), afin de reproduire des vibrations en fonction de vibrations détectées au préalable au cours d'un roulement réel dudit véhicule (11) dans un essai sur le terrain;
caractérisé en ce que :
ledit dispositif de détection de vibration (10) comprend un intégrateur (3) destiné à intégrer la sortie dudit dispositif de détection d'accélération (1), dans lequel la sortie dudit dispositif de détection d'accélération (1) est convertie par ledit intégrateur (3) en une sortie du dispositif de détection de vibration (10) indicatrice de vibration.

5. Simulateur de charge de véhicule selon la revendication 4, comprenant en outre un premier amplificateur inverseur de fonctionnement (2) destiné à inverser une amplification de la sortie en provenance dudit dispositif de détection d'accélération (1) et à fournir la sortie inversée au dit intégrateur (3).

6. Simulateur de charge de véhicule selon la revendication 5, dans lequel ledit intégrateur (3) comprend un second amplificateur inverseur de fonctionnement (31), de sorte que la polarité de la sortie de l'intégrateur (3) correspond à la polarité de l'accélération détectée.

7. Simulateur de charge de véhicule selon la revendication 5, dans lequel ledit intégrateur (3) a une caractéristique de gain de fréquence, de sorte que le gain de l'intégrateur (3) est égal à l'unité à une certaine fréquence située dans la plage 15 - 40 Hz.

8. Simulateur de charge de véhicule selon la revendication 7, dans lequel ledit intégrateur (3) a une caractéristique de gain de fréquence, de sorte que le gain de l'intégrateur (3) est égal à l'unité à une fréquence de 15,6 Hz.

9. Simulateur de charge de véhicule selon l'une des revendications 4 - 8, dans lequel ledit dispositif de détection d'accélération (1) génère une sortie de 10 V à une accélération de 50 G.

10. Simulateur de charge de véhicule selon la revendication 5, dans lequel ledit premier amplificateur inverseur (2) a un gain égal à 1.
